# EUROPÄISCHE PATENTANMELDUNG

(11) **EP 0 841 226 A1**
(43) Veröffentlichungstag der Anmeldung: **13.05.1998**
(21) Anmeldenummer: 97118800.8
(22) Anmeldetag: 29.10.1997
(51) Int. Cl.: B60R 21/28

(54) **Luftsack**

(30) Priorität: 08.11.1996 DE 19646237
(71) Anmelder: ADAM OPEL AG, 65423 Rüsselsheim (DE)
(72) Erfinder: Rick, Ulrich, Dipl.-Ing., 55595 Roxheim (DE)
(74) Vertreter: Kümpfel, Heinz, Dipl.-Ing.

(57) **Zusammenfassung**

Die Erfindung bezieht sich auf einen Luftsack (1) für eine Airbag-Einheit in einem Kraftfahrzeug, der bei Aktivierung der Airbag-Einheit schnell und mit relativ geringer Leistung des Gasgenerators seine Rückhaltekraft aufbaut und diese über einen großen Auffangweg auf einem Optimalwert hält. Dies wird durch Anordnung von Berstfolien (6) an Ausströmöffnungen (5) in der Wand (3) des Luftsackes (1) erreicht. Die Ausströmöffnungen (3) können sich in einem in die Wand (3) eingesetzten Einsatzteil (13) befinden, das mit seinem Rand (15) am Rand (16) einer Ausnehmung der Wand (3) des Luftsackes (1) befestigt ist. Die Ränder der Ausströmöffnungen (5) sind verstärkt, damit sie beim Bersten der Berstfolien (6) nicht einreißen.

## Beschreibung

Die Erfindung betrifft einen Luftsack für eine Airbag-Einheit als Sicherheitselement in Kraftfahrzeugen, der bei einem erkannten Crash durch einen Gasgenerator aus einem gefalteten Zustand vor einem gefährdeten Insassen aufgeblasen wird und beim Auffangen des Insassen das Aufblasgas durch Ausströmöffnungen abgibt.

Einen derartigen Luftsack beschreibt die GB-A 2 284 181. Bei diesem sind Ausströmöffnungen an der Unterseite des Luftsackes eingebracht. Um eine gezielte Entfaltungsrichtung des Luftsackes beim Aufblasen zu erreichen, sind über die Austrittsöffnungen Abnäher vorgesehen, die bei vollständiger Entfaltung des Luftsackes aufreißen. Dabei tritt als Nebeneffekt eine schnellere Entfaltung des Luftsackes nach Blasbeginn auf, da bis zum Reißen der Abnäher die Austrittsöffnungen durch die Abnäher gedämmt sind. Die Endform des Luftsackes wird jedoch ohne Gasverlust nicht erreicht, da bereits vor Erreichen der Endform die jeweiligen Abnäher vor den Austrittsöffnungen aufgerissen sind. Ein gezieltes Aufbauen der Rückhaltekraft des Luftsackes während des Aufblasens ist so nicht möglich. Außerdem ist die Festigkeit der Nähte an den Abnähern nicht ausreichend genau reproduzierbar.

Der Erfindung liegt die Aufgabe zugrunde, einen Luftsack für eine Airbag-Einheit zu schaffen, der schnell die erforderliche Rückhaltekraft und seine vorgesehene Endform erreicht und diese über einen relativ großen Auffangweg für den zu schützenden Insassen auf gleichmäßigem Niveau beibehält.

Erfindungsgemäß wird diese Aufgabe mit den Merkmalen des Anspruches 1 gelöst.

Bei Aktivieren der Airbag-Einheit bläst der Gasgenerator somit in einen geschlossenen Luftsack, der sich sehr schnell entfaltet, da während der Entfaltungsphase praktisch kein Treibgas verloren geht. Erst nachdem der Luftsack seine Endform erreicht hat, steigt der Innendruck auf einen Wert, bei dem die Berstfolie zumindest an einer Ausströmöffnung reißt. Dabei ist jedoch bereits eine optimale Rückhaltekraft erreicht, die durch nachfolgendes Bersten weiterer Berstfolien an Austrittsöffnungen über den Auffangweg nahezu konstant bleibt. Dadurch kann eine sehr füllige Auffangkurve im Kraft-Weg-Diagramm des Luftsackes erzielt werden, ohne daß dabei Kraftspitzen auftreten, die zu Verletzungen des Insassen führen würden.

Die Berstfolien sind vorzugsweise so bemessen, daß sie bei einem definierten Innendruck des Luftsackes in Gruppen oder einzeln nacheinander bersten. Dadurch kann ein gezieltes Bremsverhalten beim Zurückhalten des Insassen erreicht werden.

Die mit Berstfolien verschlossenen Ausströmöffnungen sind vorzugsweise an den Seitenteilen des Luftsackes angeordnet.

Die Ränder der Ausströmöffnungen sind vorteilhaft mit einer Randverstärkung versehen, die ein Einreißen der Wandung des Luftsackes von der Berstfolie aus verhindert.

Dabei können mehrere Ausströmöffnungen nebeneinander in einem Einsatzteil angeordnet sein, welches in eine Ausnehmung der Wandung des Luftsackes eingesetzt und mit seinen Rändern an den Rändern der Ausnehmung verbunden ist.

Das Einsatzteil kann mit der Wandung durch Nähen, Schweißen oder Kleben verbunden sein.

Ein Ausführungsbeispiel der Erfindung ist nachstehend anhand einer Zeichnung näher beschrieben. Es zeigen
- Fig. 1:: einen aufgeblasenen Luftsack in Seitenansicht,
- Fig. 2:: einen aufgeblasenen Luftsack in perspektivischer Darstellung,
- Fig. 3:: einen Schnitt entlang der Linie A - A in Fig. 1,
- Fig. 4:: die Kraft-Weg-Kennlinie eines Luftsackes nach der Erfindung im Vergleich zu der eines herkömmlichen Luftsackes.

Ein Luftsack 1, wie er für einen Fahrer- oder Beifahrer-Airbag verwendet wird, ist im wesentlichen zusammengesetzt aus einem Umfangsteil 2 sowie zwei Seitenteilen 3, die miteinander durch Nähen, Schweißen o. dgl. verbunden sind. An einem rückseitigen Fortsatz 4 befindet sich eine nicht dargestellte Öffnung, mit welcher der Luftsack 1 in Verbindung mit einem Gasgenerator steht, der den Luftsack 1 bei Aktivierung der Airbag-Einheit aus einem gefalteten Zustand aufbläst.

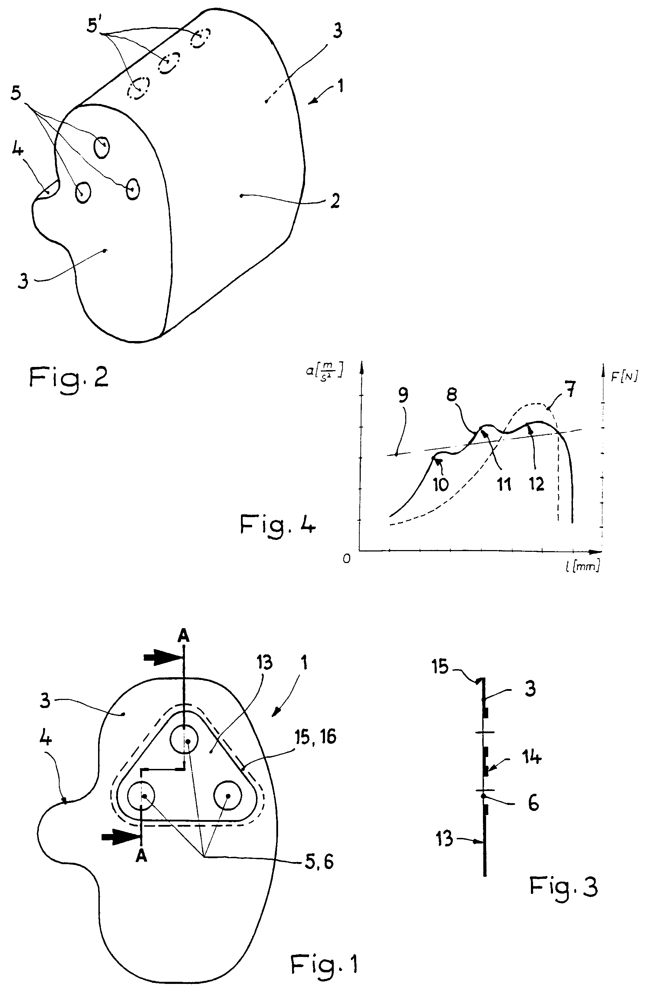

Der Luftsack 1 ist mit Ausströmöffnungen 5, 5' versehen, die sich vorzugsweise in einem der Seitenteile 3 befinden, aber auch, wie Fig. 2 zeigt, am Umfangsteil 2 angeordnet sein können. Die Austrittsöffnungen 5, 5' sind mit Berstfolien 6 solange gasdicht verschlossen, bis sich innerhalb des Luftsackes 1 ein definierter, für den Aufbau einer angemessenen Rückhaltekraft ausreichender Druck durch das Einblasen von Gas vermittels des Gasgenerators eingestellt hat. Bei Erreichen dieses Druckes zerbirst zumindest eine erste Berstfolie 6, so daß der weitere Druckanstieg innerhalb des Luftsackes 1 verzögert erfolgt. Nach Erreichen eines Druckniveaus birst eine zweite Berstfolie 6, so daß Gas aus zwei Austrittsöffnungen 5, 5' austreten kann. Bei weiterer Druckerhöhung birst eine letzte dritte Berstfolie 6 und es sind die vorgesehenen drei Austrittsöffnungen 5, 5' für die Entlastung des Luftsackes 1 geöffnet. Da inzwischen die Gaszufuhr vom Gasgenerator unterbleibt, bricht der Druck im Luftsack 1 wie gewollt schnell zusammen.

Die Fig. 4 zeigt in einem Kraft-Weg-Diagramm mit der gestrichelten Linie 7 die Aufblascharakteristik eines Luftsackes nach dem Stand der Technik. Da bei diesem schon während des Aufblasens die Ausströmöffnungen geöffnet sind, entfaltet er sich relativ langsam, die Rückhaltekraft F erreicht einen kurz anhaltenden Spitzenwert und bricht dann zusammen. Die ausgezogene Linie 8 zeigt die Aufblascharakteristik des Luftsackes 1 nach dem Ausführungsbeispiel mit drei durch Berstfolien 6 verschlossenen Austrittsöffnungen 5, 5', wobei die Berstfolien 6 nacheinander bersten und so die zugehörige Austrittsöffnung 5, 5' freigeben. Bei Aktivierung der Airbag-Einheit wird das vom Gasgenerator gelieferte Gas vollständig zur Entfaltung des Luftsackes 1 genutzt, so daß die optimale Rückhaltekraft 9 schnell und über einen kurzen Entfaltungsweg l erreicht ist. Bei Erreichen der optimalen Rückhaltekraft 9 birst eine erste Berstfolie 6, so daß ein weiterer Kraftanstieg bei 10 unterbunden wird. Die Rückhaltekraft F bleibt vielmehr nahezu bei dem optimalen Wert 9, da auch bei weiterer Gaszufuhr nacheinander, nämlich bei 11 und bei 12 die zweite und dritte Berstfolie 6 brechen und die jeweiligen Ausströmöffnungen 5, 5' freigeben.

Damit kann eine gegenüber bekannten Luftsäcken fülligere Rückhaltekurve mit besonderem Schutz für den Insassen erzielt werden. Darüber hinaus wird die Leistung des Gasgenerators besser ausgenutzt.

In vorteilhafter Ausgestaltung der Erfindung sind die Ausströmöffnungen in einem Einsatzteil 13 angeordnet und mit jeweils einer Randverstärkung 14 versehen. Das Einsatzteil 13 ist mit seinem Rand 15 mit dem Rand 16 einer dem Einsatzteil 13 entsprechenden Ausnehmung in einem Seitenteil 3 des Luftsackes 1 vernäht. Die Verstärkungen 14 verhindern ein Einreißen des Einsatzteils 13 beim Bersten der Berstfolie 6. Die Anordnung der Ausströmöffnungen 5 in einem Einsatzteil 13 vereinfacht die Fertigung des Luftsackes 1.

## Patentansprüche

1. Luftsack für eine Airbag-Einheit als Sicherheitselement in Kraftfahrzeugen, der bei einem erkannten Crash durch einen Gasgenerator aus einem gefalteten Zustand vor einem gefährdeten Insassen aufgeblasen wird und beim Auffangen des Insassen das Aufblasgas durch Austrittsöffnungen abgibt, **dadurch gekennzeichnet,** daß die Wandung des Luftsackes (1) aus einem nahezu oder vollständig gasundurchlässigen Stoff besteht und mit Austrittsöffnungen (5, 5') versehen ist, die jeweils mit einer Berstfolie (6) verschlossen sind und nach Abschluß des Aufblasvorganges bei steigendem Innendruck des Luftsackes (1) bersten.

2. Luftsack nach Anspruch 1, **dadurch gekennzeichnet,** daß die Berstfolien (6) mit steigendem Innendruck im Luftsack (1) bei einem definierten Innendruck gleichzeitig oder in Gruppen nacheinander oder einzeln nacheinander bersten.

3. Luftsack nach Anspruch 1 und 2, **dadurch gekennzeichnet,** daß die Austrittsöffnungen (5) an Seitenteilen (3) des Luftsackes (1) vorgesehen sind.

4. Luftsack nach Anspruch 1 und 2, **dadurch gekennzeichnet,** daß Austrittsöffnungen (5, 5') sowohl an Seitenteilen (3) als auch am Umfangsteil (2) angeordnet sind.

5. Luftsack nach Anspruch 1 bis 4, **dadurch gekennzeichnet,** daß die Ränder der Austrittsöffnungen (5, 5') mit jeweils einer ein Einreißen der Wandung des Luftsackes (1) von der Berstfolie (6) aus verhindernden Randverstärkung (14) versehen ist.

6. Luftsack nach einem oder mehreren der Ansprüche 1 bis 5, **dadurch gekennzeichnet,** daß mehrere Austrittsöffnungen (5, 5') nebeneinander in zumindest einem Einsatzteil (13) angeordnet sind, welches in jeweils eine Ausnehmung der Wandung des Luftsackes (1) eingesetzt ist und an seinen Rändern (15) mit dem jeweiligen Rand (16) der Ausnehmung verbunden ist.

7. Luftsack nach Anspruch 6, **dadurch gekennzeichnet,** daß die Ränder (15) der Einsatzteile (13) mit den Rändern (16) der Ausnehmungen durch Nähen, Schweißen oder Kleben verbunden sind.
